# EUROPÄISCHE PATENTSCHRIFT

(11) **EP 1 876 158 B1**
(45) Veröffentlichungstag und Bekanntmachung des Hinweises auf die Patenterteilung: **13.05.2009**
(21) Anmeldenummer: 07110989.6
(22) Anmeldetag: 25.06.2007
(51) Int. Cl.: C04B 35/52, C04B 35/56, C04B 35/565, C04B 35/573, F16D 69/02

(54) **Verfahren zur Herstellung von Carbidkeramik-Bauteilen**
Method for manufacturing carbide ceramic components
Procédé destiné à la fabrication de composants carbocéramiques

(30) Priorität: 03.07.2006 DE 102006031583
(43) Veröffentlichungstag der Anmeldung: 09.01.2008
(73) Patentinhaber: Deutsches Zentrum für Luft- und Raumfahrt e.V., 51147 Köln (DE)
(72) Erfinder: Schmidt, Jens, 70736, Fellbach (DE); Scheiffele, Matthias, 70567, Stuttgart (DE); Heidenreich, Bernhard, 71679, Asperg (DE)
(74) Vertreter: Hoeger, Stellrecht & Partner Patentanwälte

(56) Entgegenhaltungen:
- EP-A- 1 314 708
- WO-A-20/05008097
- DE-C1- 4 438 455
- DE-C1- 19 719 634
- DE-U1- 9 422 458
- US-A1- 2001 001 189
- US-A1- 2006 151 912

## Beschreibung

Die Erfindung betrifft ein Verfahren zur Herstellung von Carbidkeramik-Bauteilen.

Carbidkeramik-Bauteile wie beispielsweise SiC-Keramikbauteile weisen verschiedene Einsatzmöglichkeiten auf. Beispielsweise werden sie als Reibkörper oder als Wärmesenken eingesetzt.

Aus der DE 100 45 881 A1 ist eine Sicherheitseinrichtung für einen Aufzug bekannt, welche ein Bremsteil umfasst, das mindestens einen Reibkörper mit mindestens einer Reibfläche aufweist. Der Reibkörper weist als Reibwerkstoff einen faserverstärkten keramischen Verbundwerkstoff auf, der Siliciumcarbid und als Verstärkungskomponente Kohlenstofffasern enthätt.

Aus der EP 1 493 723 A1 ist ein Verfahren zur Herstellung von Strukturkeramiken und/oder Funktionskeramiken aus Silciumcarbidkeramik bekannt, bei welchem aus einem cellulosehaltigen Werkstoff ein poröser Vorkörper hergestellt wird, der poröse Vorkörper mittels Pyrolyse in einen offenporösen Kohlenstoffkörper umgewandelt wird und der offenporöse Kohlenstoffkörper durch Infiltration von Silicium umfassenden Materialien in eine Silicium umfassende Carbidkeramik, insbesondere Siliciumcarbidkeramik umgewandelt wird. Zur Herstellung des Vorkörpers wird als Ausgangsbestandteil mindestens cellulosehaltiges Pulver verwendet.

Aus der EP 1 634 860 A2 ist ein Verfahren zur Herstellung eines Carbidkeramikmaterials bekannt, bei welchem aus einem Ausgangsmaterial, welches cellulosehaltiges Pulver umfasst, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium umfassende Carbidkeramik umgewandelt wird. Zur Herstellung des Ausgangsmaterials werden Kohlenstoff-Kurzfasern verwendet.

Aus der EP 1 657 227 A1 ist ein Verfahren zur Herstellung eines Carbidkeramikmaterials mit definiertem gradierten Phasenverteilungsprofil bekannt, bei welchem aus einem Ausgangsmaterial, welches cellulosehaltiges Pulver umfasst, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium umfassende Carbidkeramik umgewandelt wird. Der Vorkörper wird mit einem definierten gradierten Dichteprofil hergestellt.

Aus der DE 198 34 542 C2 ist ein Verfahren zur Herstellung von Verstärkungsfasern enthaltenden Körpern bekannt, wobei Fasern, Faserbündel oder Faseragglomerate mit wenigstens einem karbonisierbaren Bindemittel zu einer Pressmasse vermischt werden und die Pressmasse zu einem Verstärkungsfasern enthaltenden Körper gepresst wird, wobei eine Pressvorrichtung mit einer endformnahen Pressform verwendet wird. Die Pressmasse wird in einer Pressform gepresst, welche Einlagen aufweist, so dass der resultierende Verstärkungsfasern enthaltende Körper zu diesen Einlagen korrespondierende Ausnehmungen aufweist, derart, dass die Verstärkungsfasern entlang dieser Ausnehmungen etwa parallel zu den Seitenkanten der Ausnehmungen orientiert sind.

Aus der DE 1 301 017 ist ein Verfahren zum Verhindern des Werfens bei der pulvermetallurgischen Herstellung von schlanken Formkörpern aus einem hochschmelzenden Bestandteil und einer niedriger schmelzenden Grundmasse bekannt, bei dem die Pulvermischung verpresst wird, worauf mit flüssiger Phase gesintert und dann abgekühlt wird. Die Sinterung wird mit einer zu einem Stück vereinigten Mehrzahl der schlanken Formkörper durchgeführt, die über einen dünnen, abbrechbaren Längssteg zwischen jedem Formkörper sich gegenseitig abstützend miteinander verbunden sind. Nach dem Abkühlen werden die gesinterten Formkörper durch Abbrechen Ihrer Verbindungsstege voneinander getrennt.

Aus der EP 1 314 708 A2 ist ein Verfahren zum Herstellen eines Formkörpers bekannt, bei dem zunächst eine Mischung auf kohlenstoffhaltigen Lang- oder Kurzfasern, die gebündelt sein können und/oder mit einer Beschichtung überzogen sein können, und Füllmitteln und/oder Bindemitteln, wie Harz und/oder Pech hergestellt wird, die Mischung danach unter erhöhtem Druck und/oder erhöhter Temperatur zu einem Vorkörper für die Kernzone geformt und gehärtet wird, mit einem Vormaterial für eine Deckschicht überzogen, anschließend zum Herstellen eines aus mit Kohlenstofffasern verstärkten Kohlenstoff bestehenden Formkörpers pyrolysiert oder graphitiert wird, der daran anschließend mit schmelzflüssigem Silicium unter vermindertem Druck oder unter Inertgas infiltriert wird. Auf den Vorkörper wird für die Kernzone vor, nach oder während des Aufbringens des Vormaterials für die Deckschicht zusätzlich Material für die Steg- oder Leerstellen, gegebenenfalls unter Formgebung und Härtung oder unter Druck und/oder Temperatur aufgebracht.

Aus der DE 94 22 458 A1 ist eine Reibeinheit zum reibenden Eingriff mit einem Gegenkörper, in Form eines porösen, mit flüssigem Silicium infiltrierten, durch Einleiten einer chemischen Reaktion unter Bildung von Siliciumcarbid keramisierten Kohlenstoffkörpers bekannt. Die Reibeinheit ist aus einem ersten und einem zweiten Kohlenstoffkörper hergestellt, wobei vor der Silicium-Infiltration mindestens einer dieser porösen Grundstoffkörper so strukturiert wurde, dass in definierten Innenbereichen Ausnehmungen zur Kühlung und/oder Versteifung gebildet sind, die nach der Keramisierung ihre Form und Größe beibehalten, und die Ausnehmungen in dem einen Grundstoffkörper durch den anderen Grundstoffkörper abgedämmt sind, sodass jeweils Hohlräume gebildet sind.

Aus der DE 44 38 455 C1 ist ein Verfahren zur Herstellung einer Reibeinheit bekannte, bei der ein poröser Grundstoffkörper vor der Silicium-Infiltration so strukturiert ist, dass in definierten Innen- und/oder Außenbereichen Hohlräume und/oder Ausnehmungen zur Kühlung und/oder Versteifung gebildet werden, die nach der Keramisierung in ihrer Form und Größe beibehalten werden.

Aus der WO 2005/008097 A2 ist ein Kompositteil zur Verwendung in einem Flugzeugbremsen-Heatpack bekannt, welcher eine Kernschicht mit einem Stirnbereich und eine Reibschicht umfasst, welche mit dem Stirnbereich verbunden ist, wobei die Reibschicht eine niedrigere Dichte hat als die Kernschicht.

Der Erfindung liegt die Aufgabe zugrunde, ein Verfahren zur Herstellung von Carbidkeramik-Bauteilen bereitzustellen, mittels welchem sich die Carbidkeramik-Bauteile mit minimiertem Aufwand herstellen lassen.

Diese Aufgabe wird erfindungsgemäß dadurch gelöst, dass ein Vorkörperverbund hergestellt wird, welcher eine Mehrzahl von Vorkörpern für die jeweiligen Carbidkeramik-Bauteile umfasst, wobei jeder Vorkörper an mindestens einem benachbarten Vorkörper durch mindestens ein Stegelement gehalten wird, und dass der Vorkörperverbund pyrolysiert und/oder graphitiert wird.

Aus den individuellen Vorkörpern werden die individuellen Carbidkeramik-Bauteile hergestellt. Die Vorkörper werden endkonturnah hergestellt oder so hergestellt, dass durch geringen Bearbeitungsaufwand an den hergestellten Carbidkeramik-Bauteilen die Endkontur herstellbar ist.

Die Vorkörper sind in dem Vorkörperverbund durch die Stegelemente als Verbindungsstege zusammengehalten. Dadurch lässt sich der Vorkörperverbund als zusammenhängendes Gebilde herstellen, welches als Ganzes handhabbar ist. Beispielsweise kann eine Warmpressung in einem einzigen Gesenk (Vielfachgesenk mit mehreren Kammern) erfolgen oder eine Spritzgießherstellung kann in einer einzigen Spritzgießform erfolgen. Auch die Entformung lässt sich auf einfachere Weise durchführen, da nicht jedes Bauteil individuell entformt werden muss, sondern der Vorkörperverbund als Ganzes entformbar ist.

Weiterhin kann dann der Vorkörperverbund als Ganzes pyrolysiert werden.

Es lassen sich dadurch Carbidkeramik-Bauteile in hoher Stückzahl mit geringem Zeitaufwand und Kostenaufwand herstellen.

Weiterhin ist es möglich, an dem pyrolysierten und/oder graphitierten Vorkörperverbund (welcher dann ein offenporöser Kohlenstoffkörperverbund ist) eine Carbidbildnerinfiltration durchzuführen. Der Kohlenstoffkörperverbund lässt sich als Ganzes handhaben, so dass die Carbidbildnerinfiltration erleichtert ist.

Es müssen dabei nicht alle hergestellten Vorkörper zu Carbidkeramik-Bauteilen bearbeitet werden.

Günstig ist es, wenn an dem pyrolysierten Vorkörperverbund (offenporöser Kohlenstoffkörperverbund) eine Carbidbildnerinfiltration durchgeführt wird. Es ist grundsätzlich möglich, dass der Verbund nach der Pyrolyse durch Entfernen von Stegelementen gelöst wird, d. h. dass individuelle offenporöse Kohlenstoffkörper hergestellt werden, welche dann individuell keramisiert werden.

Durch die Carbidbildnerinfiltration des pyrolysierten Vorkörperverbunds lässt sich die Keramisierung auf zeitsparende Weise durchführen.

Insbesondere wird die Carbidbildnerinfiltration drucklos durchgeführt. Dadurch erhält man ein optimiertes Keramisierungsergebnis.

Als Carbidbildner wird insbesondere Silicium eingesetzt. Es kann auch Titan oder Molybdän eingesetzt werden. Es ist dabei günstig, wenn die Carbidbildnerinfiltration mittels einer Metallschmelze durchgeführt wird. (Eine Siliciumschmelze kann als Metallschmelze angesehen werden.) Es ist auch möglich, dass die Carbidbildnerinfiltration mittels einer Kupfer-Silicium-Legierung durchgeführt wird. Man erhält dadurch eine duktile Kupfermatrix in den hergestellten Carbidkeramik-Bauteilen. Man kann dadurch Carbidkeramik-Bauteile herstellen, welche für tribologische Anwendungen vorteilhafte Eigenschaften haben. Insbesondere sind solche Carbidkeramik-Bauteile weniger hart und weniger spröde als wenn keine duktile Kupfermatrix vorhanden ist.

Ganz besonders vorteilhaft ist es, wenn ein Carbidkeramik-Bauteilverbund hergestellt wird. Dieser Carbidkeramik-Bauteilverbund wird aus einem Vorkörperverbund, welcher durch Pyrolyse und/oder Graphitierung in einen Kohlenstoffkörperverbund umgewandelt wird, hergestellt. Die Auflösung in individuelle Carbidkeramik-Bauteile erfolgt erst nach der Carbidbildnerinfiltration. Ein hergestellter Carbidkeramik-Bauteilverbund lässt sich auch auf einfache Weise mechanisch bearbeiten, da der Verbund als Ganzes bearbeitbar ist.

Insbesondere weist ein Stegelement (Verbindungssteg) eine Höhe auf, welche kleiner ist als eine Höhe eines Vorkörpers, an dem das Stegelement gehalten ist. Dadurch lässt sich ein Stegelement auf einfache Weise entfernen, um individuelle Carbidkeramik-Bauteile zu erhalten.

Insbesondere weist ein Stegelement eine Höhe zwischen 0,5 mm und 10 mm auf, je nach Carbidkeramik-Bauteil. Solche Stegelemente lassen sich auf einfache Weise "entfernen" bzw. am Ende brechen.

Aus dem gleichen Grund ist es günstig, wenn ein Stegelement eine Breite (entsprechend dem Abstand zwischen benachbarten Vorkörpern bzw. benachbarten Kohlenstoffkörpern bzw. benachbarten Carbidkeramik-Bauteilen) zwischen 0,5 mm und 10 mm aufweist.

Insbesondere wird der Vorkörperverbund über Pressen (insbesondere Warmpressen) oder Spritzgießen hergestellt. Durch Aushärtung eines Bindemittels und insbesondere eines Harzes erhält man einen Vorkörperverbund, welcher die individuellen Vorkörper enthält, die wiederum über Stegelemente miteinander verbunden sind, und welcher als Ganzes handhabbar ist.

Insbesondere wird eine Form (als Pressgesenk oder Spritzgießform) verwendet, welche mit einer Stegelement-Gegenstruktur versehen ist. Über die Stegelement-Gegenstruktur werden die Stegelemente an dem Vorkörperverbund hergestellt.

Es hat sich gezeigt, dass ein Pressvorgang dann gleichmäßig ausgeführt werden kann, wenn ein unteres Teil einer entsprechenden Pressvorrichtung mit der Stegelement-Gegenstruktur versehen wird. Dieses untere Teil ist beispielsweise ein Unterstempel bzw. ein Pressgesenk. Es lässt sich dann erreichen, dass sowohl im Bereich der eigentlichen Bauteile (Vorkörper) ein pulverförmiges Ausgangsmaterial verdichtet wird als auch im Bereich der Stegelemente. Es ist dann vorteilhaft, wenn die Stegelement-Gegenstruktur an einem Unterstempel angeordnet wird oder an einem Pressgesenk angeordnet wird und insbesondere in ein Pressgesenk eingelegt wird.

Es ist dann weiter vorteilhaft, wenn nachfolgend der Positionierung der Stegelement-Gegenstruktur ein (pulverförmiges) Ausgangsmaterial für den Vorkörperverbund eingefüllt wird.

Es ist dann weiterhin günstig, wenn ein Oberstempel, durch den der Pressvorgang durchgeführt wird, angepasst an die Stegelement-Gegenstruktur segmentiert ist. Der Oberstempel weist entsprechende Ausnehmungen für die Stegelemente auf. Dadurch lassen sich die Kräfte auf den Vorkörperverbund gleichmäßig übertragen.

Es ist insbesondere vorteilhaft, wenn die Stegelement-Gegenstruktur eine oder mehrere Ausnehmungen aufweist. Diese Ausnehmungen können während des Einfüllvorgangs und Pressvorgangs mit Material gefüllt werden. Dadurch kann in den Ausnehmungen eine Mitverdichtung erfolgen. Es werden dann getrennte Stege ausgebildet, über die der Vorkörperverbund gebildet ist. Die Ausnehmungen sind an der Oberseite und/oder Unterseite der Stegelement-Gegenstruktur positioniert. Sie gewährleisten eine Entformung nach dem Pressen.

Es ist weiterhin vorteilhaft, wenn nach dem Pressvorgang zunächst die Stegelement-Gegenstruktur entfernt wird, bevor der Vorkörperverbund der entsprechenden Form (Pressgesenk) entnommen wird.

Insbesondere ist der Vorkörperverbund porös. Durch Pyrolyse lässt sich dann ein offenporöser Kohlenstoffkörper herstellen, welcher wiederum zur Keramisierung mit Carbidbildner infiltrierbar ist.

Bei einer Ausführungsform umfasst ein Ausgangsmaterial für den Vorkörper ein kohlenstoffhaltiges Material und ein aushärtbares Bindemittel.

Dem Ausgangsmaterial können Fasern zugemischt sein, um ein schadenstolerantes Carbidkeramikmaterial zu erhalten. Es können auch noch weitere Additive vorgesehen sein.

Insbesondere wird der Vorkörperverbund aus einem biogenen Material hergestellt. Beispielsweise umfasst das Ausgangsmaterial cellulosehaltiges Pulver. Der entsprechende Vorkörperverbund lässt sich auf kostengünstige Weise herstellen.

Es kann vorgesehen sein, dass die Stegelemente mit einer Fremdmaterialstruktur zur Stabilisierung versehen werden. Dadurch ist die Gefahr des Bruchs von Stegelementen während der Pyrolyse, bei der Schrumpfspannungen entstehen, verringert.

Die Fremdmaterialstruktur kann beispielsweise ein Gewebe, Gewirke oder Vlies sein, welches an und beispielsweise in einem Stegelement positioniert wird.

Ganz besonders vorteilhaft ist es, wenn an einem Stegelement eine oder mehrere Sollbruchstellen hergestellt werden. Es lassen sich dann individuelle Carbidkeramik-Bauteile aus dem endgültig hergestellten Carbidkeramik-Bauteilverbund herauslösen.

Beispielsweise wird eine Sollbruchstelle über Formgebung des Stegelements hergestellt. Insbesondere ist eine Materialverdünnung beispielsweise in Form einer Kerbe vorgesehen oder es ist eine Materialwölbung vorgesehen.

Es ist auch möglich, dass eine Sollbruchstelle über Materialwahl hergestellt wird. Beispielsweise wird ein Stegelement mit größerer Sprödigkeit als die Carbidkeramik-Bauteile, welche das Stegelement verbindet, hergestellt. Dadurch lässt sich das Stegelement mit kleinen Stegelementansätzen abbrechen.

Ein Stegelement kann so hergestellt werden, dass es spröder als ein Carbidkeramik-Bauteil ist. Die Sprödigkeit lässt sich mittels der Herstellung des Vorkörperverbunds über ein Dichteprofil beeinflussen, wie es in der EP 1 657 227 A1 beschrieben ist. Durch entsprechende Beeinflussung des Dichteprofils bei der Herstellung des Vorkörpers kann man einen höheren Keramikanteil erhalten mit entsprechender vergrößerter Sprödigkeit.

Es wird dazu beispielsweise ein Stegelement mit höherem Carbidkeramikanteil als ein Carbidkeramik-Bauteil, an dem es angeordnet ist, hergestellt. Ein solches Stegelement kann von dem Carbidkeramik-Bauteil mit kleinem Stegelementansatz weggebrochen werden.

Ganz besonders vorteilhaft ist es, wenn der Vorkörperverbund so hergestellt und/oder so pyrolysiert wird, dass Schrumpfspannungen während der Pyrolyse kein Brechen der Stegelemente verursachen. Insbesondere ist es vorgesehen, dass Schrumpfspannungen aufgefangen werden, um ein Brechen der Stegelemente zu verhindern.

Dies lässt sich beispielsweise dadurch erreichen, dass der Vorkörperverbund bei der Pyrolyse gleichmäßig (gleichzeitig) beschwert wird. Dadurch lassen sich die auftretenden Spannungen minimieren.

Die Herstellung ist vereinfacht, wenn Vorkörperverbunde für die Pyrolyse gestapelt werden. Das Eigengewicht von Vorkörperverbunden sorgt für eine gleichmäßige Beschwerung, so dass der zusätzliche Aufwand für eine weitere Beschwerung (beispielsweise über eine oder mehrere Graphitplatten) verringert ist. Ferner lassen sich dadurch auf einfache Weise Kohlenstoffkörper für die spätere Keramisierung in hoher Stückzahl herstellen.

Insbesondere werden Stegelemente an Seiten und/oder Ecken von Vorkörpern hergestellt. Dadurch lässt sich auf einfache Weise eine Verbindung zwischen benachbarten Vorkörpern erhalten.

Es kann vorteilhaft sein, wenn Stegelemente an oder in der Nähe einer Oberseite oder Unterseite der Vorkörper hergestellt werden. Dadurch lassen sich diese auf einfache Weise herstellen und Carbidkeramik-Bauteile lassen sich dann auf einfache Weise aus einem Carbidkeramik-Bauteilverbund herauslösen. Weiterhin lässt sich ein großer Abstand zu einer Funktionsoberfläche wie einer Reibfläche des hergestellten Carbidkeramik-Bauteils erreichen. Dadurch kann gegebenenfalls eine Entfernung von Stegelementansätzen nicht notwendig sein.

Es ist vorgesehen, dass zur Bereitstellung von individuellen Carbidkeramik-Bauteilen an den Carbidkeramik-Bauteilen die Stegelemente oder Stegelementansätze entfernt werden. Bei der erfindungsgemäßen Lösung kann dies an einem Carbidkeramik-Bauteilverbund erfolgen.

Bei einer Ausführungsform werden zur Entfernung der Stegelemente oder Stegelementansätze Carbidkeramik-Bauteilverbunde an einer Haltevorrichtung gehalten. Durch die Haltevorrichtung wird der Carbidkeramik-Bauteilverbund ausgerichtet gehalten, so dass eine "globale" Bearbeitung beispielsweise durch eine Flächenschleifmaschine möglich ist. Es lassen sich gleichzeitig mehrere Carbidkeramik-Bauteile bearbeiten und dabei gleichmäßig abschleifen.

Die Entfernung der Stegelemente oder Stegelementansätze kann über mechanische Bearbeitung (wie spanabhebende Bearbeitung, Brechen oder Stanzen) und/oder Laserbearbeitung erfolgen.

Insbesondere erfolgt eine Schleifbearbeitung. Es ist dabei auch möglich, integral mit der Entfernung der Stegelemente oder Stegelementansätze eine Endkonturbearbeitung für die hergestellten Carbidkeramik-Bauteile durchzuführen. Beispielsweise erfolgt über eine Schleifbearbeitung einer Seite von Carbidkeramik-Bauteilen gleichzeitig die Herstellung von Reibflächen an den Carbidkeramik-Bauteilen.

Die nachfolgende Beschreibung bevorzugter Ausführungsformen dient im Zusammenhang mit der Zeichnung der näheren Erläuterung der Erfindung. Es zeigen:
- Figur 1: eine schematische perspektivische Ansicht eines Ausführungs-beispiels eines erfindungsgemäßen Vorkörperverbunds;
- Figur 2: eine Draufsicht auf ein Ausführungsbeispiel eines erfindüngs-gemäßen Carbidkeramik-Bauteilverbunds;
- Figur 3: eine Draufsicht auf ein weiteres Ausführungsbeispiel eines erfindungsgemäßen Carbidkeramik-Bauteilverbunds;
- Figur 4: eine seitliche Schnittdarstellung eines Ausführungsbeispiels eines Vorkörperverbunds mit einer ersten Ausführungsform eines Stegelements;
- Figur 5: eine seitliche Schnittdarstellung eines Ausführungsbeispiels eines Vorkörperverbunds mit einer zweiten Ausführungsform eines Stegelements;
- Figur 6: eine seitliche Schnittdarstellung eines Ausführungsbeispiels eines Vorkörperverbunds mit einer dritten Ausführungsform eines Stegelements;
- Figur 7: eine seitliche Schnittdarstellung eines Ausführungsbeispiels eines Vorkörperverbunds mit einer vierten Ausführungsform eines Stegelements;
- Figur 8: ein Ausführungsbeispiel eines Stapels von Vorkörperverbunden für die Pyrolyse;
- Figur 9: ein Ausführungsbeispiel einer Anordnung für die Carbidbildnerinfiltration eines pyrolysierten Vorkörperverbunds; und

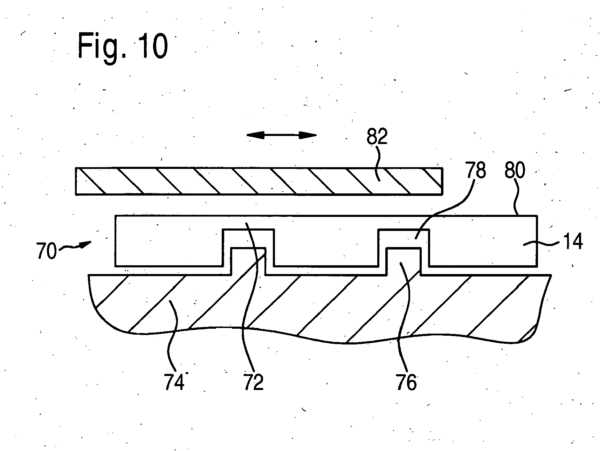

- Figur 10: eine schematische Darstellung eines Ausführungsbeispiels der Schleifbearbeitung eines Carbidkeramik-Bauteilverbunds zur Entfernung von Stegelementen/Stegelementansätzen.

Üblicherweise werden Carbidkeramik-Bauteile dadurch hergestellt, dass zunächst aus einem Ausgangsmaterial ein Vorkörper hergestellt wird, der Vorkörper durch Pyrolyse in einen offenporösen Kohlenstoffkörper umgewandelt wird und anschließend der offenporöse Kohlenstoffkörper durch Carbidbildnerinfiltration keramisiert wird.

Das Ausgangsmaterial für den Vorkörper umfasst ein kohlenstoffhaltiges Material und ein Bindemittel. Es können auch zusätzlich ein oder mehrere Additive und/oder Katalysatoren vorgesehen werden. Das Ausgangsmaterial kann auch Fasern umfassen.

Beispielsweise umfasst das Ausgangsmaterial ein biomorphes Material wie beispielsweise cellulosehaltiges Pulver zur Kohlenstoffbereitstellung, wie es in der EP 1 493 723 A1 beschrieben wird, auf die ausdrücklich Bezug genommen wird. Das Bindemittel ist in der Regel ein aushärtbares Harz.

Das Ausgangsmaterial kann beispielsweise Kohlenstoff-Kurzfasern umfassen. Dies ist in der EP 1 634 860 A2 beschrieben, auf die ausdrücklich Bezug genommen wird.

Der Vorkörper kann mit einem definierten gradierten Dichteprofil hergestellt werden, wie es in der EP 1 657 227 A1 beschrieben wird, auf die ausdrücklich Bezug genommen wird.

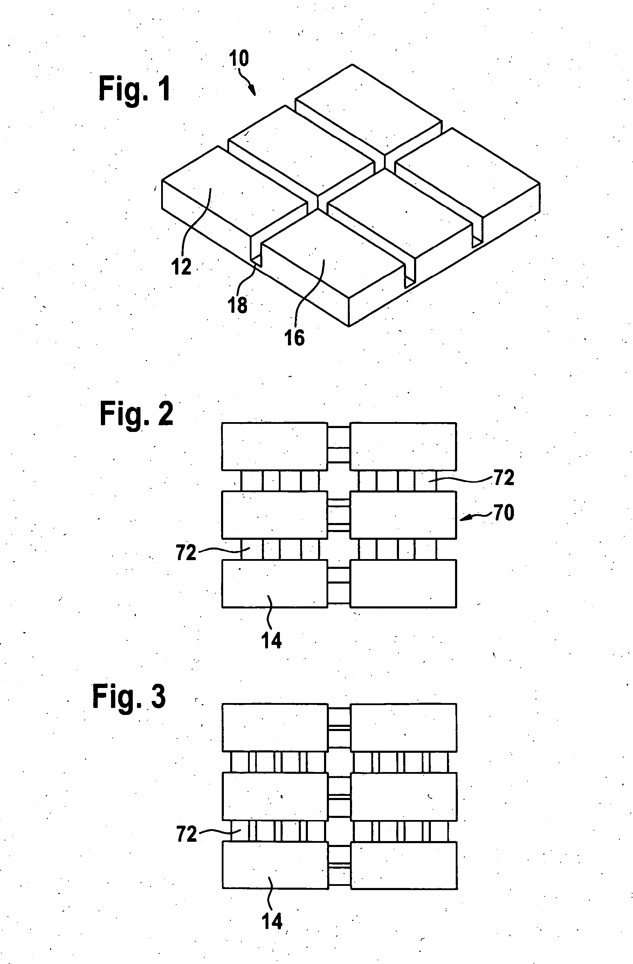

Erfindungsgemäß ist es vorgesehen, dass ein Carbidkeramik-Bauteilverbund hergestellt wird, welcher eine Mehrzahl von zusammenhängenden individuellen Carbidkeramik-Bauteilen umfasst (Figuren 2 und 3). Die Carbidkeramik-Bauteile werden aus diesem Carbidkeramik-Bauteilverbund herausgenommen, beispielsweise durch Brechen an den Stegelementen.

Dazu wird zunächst ein Vorkörperverbund 10 hergestellt (Figur 1). Der Vorkörperverbund 10 umfasst eine Mehrzahl von Vorkörpern 12 für die Carbidkeramik-Bauteile 14. Die Vorkörper 12 werden endkonturnah zu den Carbidkeramik-Bauteilen 14 hergestellt.

Benachbarte Vorkörper 12, 16 sind über ein oder mehrere Stegelemente 18 (Verbindungsstege) aneinander gehalten. Die Stegelemente 18 eines Vorkörperverbunds 10 halten die Vorkörper 16 in dem Vorkörperverbund 10 zusammen. Ein Stegelement 18 ist dazu mit dem entsprechenden Vorkörper 12 und dem benachbarten Vorkörper 16 verbunden.

Ein Stegelement 18 weist eine Höhe auf, welche kleiner ist als die Höhe der entsprechenden Vorkörpers 12 und 16. Die Höhe eines Stegelements 18 liegt üblicherweise im Bereich zwischen 0,5 mm und 10 mm.

Die Breite eines Stegelements 18 (welche dem Abstand zwischen den benachbarten Vorkörpern 12 und 16 entspricht) liegt im Bereich zwischen 0,5 mm und 10 mm.

Die Stegelemente 18 sind Vorkörper-Stegelemente, welche integral mit den Vorkörpern 12, 16 usw. hergestellt werden.

Dazu wird bei einer Ausführungsform in einem Gesenk, in welchem das Ausgangsmaterial angeordnet wird und welches eine entsprechende Formgebung, mit einer Stegelement-Gegenstruktur aufweist, ein Warmpressvorgang durchgeführt, um den Vorkörperverbund 10 herzustellen. Die Gesenkform weist eine entsprechende Innenstruktur auf. Die Formgebung ist insbesondere so, dass eine Entfernung erleichtert ist. Beispielsweise ist eine Entformungsschräge für jeden individuellen Vorkörper vorgesehen.

Es hat sich als günstig erwiesen, wenn die Stegelement-Gegenstruktur an einem Unterstempel positioniert wird bzw. in ein Pressgesenk eingelegt wird, wobei ein Oberstempel in Richtung des Unterstempels wirkt bzw. in Richtung des Pressgesenks wirkt. Die Stegelement-Gegenstruktur wird zunächst positioniert und anschließend wird das Ausgangsmaterial (welches insbesondere in Pulverform vorliegt) eingefüllt.

Der Oberstempel ist angepasst an die Stegelement-Gegenstruktur segmentiert; er weist Ausnehmungen für die Stegelemente auf. Es lässt sich dadurch erreichen, dass die Kräfte gleichmäßig übertragen werden und insbesondere die Pressmasse über ihr ganzes Volumen gleichmäßig verdichtet wird.

Beispielsweise weist ein Oberstempel eine Form auf, wie sie in Figur 1 gezeigt ist.

Die Stegelement-Gegenstruktur ist dann vorteilhafterweise mit Ausnehmungen versehen. Diese werden während des Einfüllvorgangs und Pressvorgangs mit Pressmaterial gefüllt und es erfolgt eine Mitverdichtung. Es lässt sich dadurch eine Stegstruktur ausbilden, wie sie beispielsweise in den Figuren 2 und 3 gezeigt ist. Es liegt dann eine Mehrzahl von beabstandeten Stegelementen vor.

Nach dem Pressvorgang muss zunächst die Stegelement-Gegenstruktur entfernt werden. Die Ausnehmungen sind entsprechend an der Oberseite und/oder Unterseite der Stegelement-Gegenstruktur so positioniert, dass eine Entformung nach dem Pressen möglich ist. Nach der Entfernung der Stegelement-Gegenstruktur kann dann der entsprechende Vorkörperverbund dem Gesenk entnommen werden.

Es hat sich gezeigt, dass sich bei einer solchen Verfahrensdurchführung, bei der die Stegelement-Gegenstruktur nicht an einem Oberstempel angeordnet ist, sondern am Unterstempel bzw. in dem Pressgesenk positioniert ist, der Pressvorgang sich gleichmäßig durchführen lässt und eine Verdichtung sowohl der Stegelemente als auch der eigentlichen Bauteile (der Vorkörper im Vorkörperverbund) erfolgt.

Bei einer anderen Ausführungsform ist eine Spritzgussherstellung des Vorkörperverbunds 10 vorgesehen, wobei eine Spritzgießform eine entsprechende Innenstruktur aufweist, über welche die Stegelemente 18 herstellbar sind.

Die Formgebung des Gesenks bzw. der Spritzgießform ist angepasst an die gewünschte Ausbildung der Stegelemente 18.

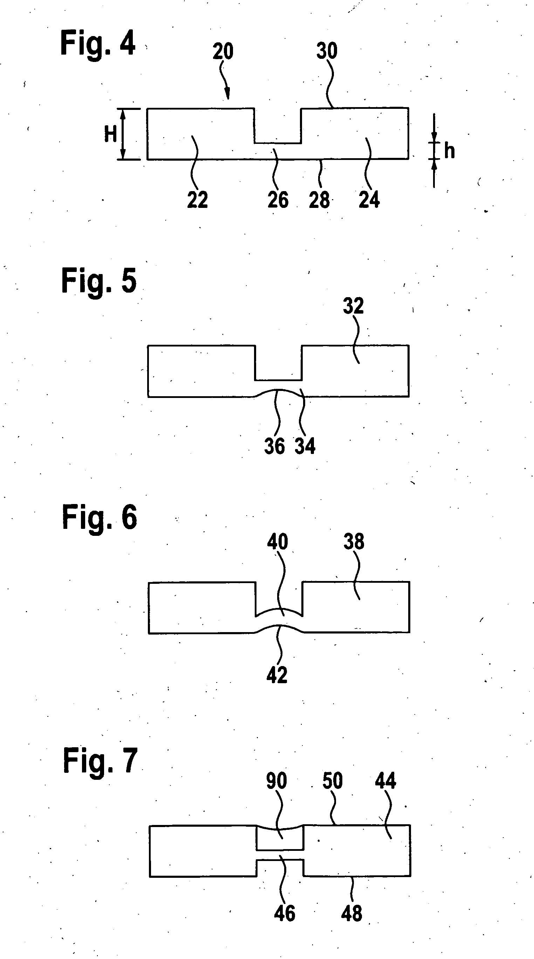

In Figur 4 ist ein Ausführungsbeispiel 20 eines Vorkörperverbunds schematisch gezeigt, bei dem benachbarte Vorkörper 22, 24 durch ein oder mehrere Stegelemente 26 verbunden sind. Das Stegelement weist eine Höhe h auf, welche kleiner ist als eine Höhe H der Vorkörper 22, 24. Das Stegelement 26 ist parallel zu einer Unterseite 28 und zu einer Oberseite 30 der Vorkörper 22, 24 angeordnet, wobei es fluchtend mit der Unterseite 28 ausgerichtet ist.

Bei einem Vorkörperverbund 32 (Figur 5) ist ein Stegelement 34 vorgesehen, welches in einem mittleren Bereich eine Verdünnung 36 beispielsweise in der Art einer Einkerbung aufweist. Diese Verdünnung 36 dient als Sollbruchstelle bei einem Carbidkeramik-Bauteilverbund.

Bei einem Vorkörperverbund 38 (Figur 6) sind Stegelemente 40 vorgesehen, welche eine Einwölbung 42 aufweisen. Diese Einwölbung dient ebenfalls als Sollbruchstelle für einen Carbidkeramik-Bauteilverbund.

Es ist grundsätzlich auch möglich, dass bei einem Vorkörperverbund 44 (Figur 7) Stegelemente 46 sowohl beabstandet zu einer Unterseite 48 als auch zu einer Oberseite 50 der entsprechenden Vorkörper zwischen den Vorkörpern positioniert sind.

Der hergestellte Vorkörperverbund 10 mit seiner Mehrzahl an Vorkörpern, welche über Stegelemente 18 aneinander gehalten sind, lässt sich als Ganzes handhaben und als Ganzes pyrolysieren, um einen offenporösen Kohlenstoffkörperverbund herzustellen. Es erfolgt dabei auch eine Pyrolyse der Stegelementbereiche.

Die Pyrolyse, welche an dem Vorkörperverbund 10 (Grünkörperverbund) durchgeführt wird, erfolgt unter Inertgasatmosphäre, wobei beispielsweise Stickstoff als Inertgas eingesetzt wird. Vorzugsweise wird die Pyrolyse unter Normaldruck durchgeführt. Die Maximaltemperatur der Pyrolyse liegt zwischen ca. 800°C und 1700°C.

Bei der Pyrolyse treten üblicherweise Schrumpfspannungen auf, die grundsätzlich dazu führen können, dass die Stegelemente 18 brechen. Die Stegelemente 18 müssen so ausgebildet sein bzw. die Pyrolyse muss so durchgeführt werden, dass auftretende Schrumpfspannungen aufgefangen werden können, ohne dass die Stegelemente 18 brechen.

Es ist dazu vorgesehen, dass die Vorkörperverbunde 10 beschwert und insbesondere gleichmäßig beschwert werden, um die auftretenden Spannungen zu minimieren.

Bei einer Ausführungsform ist es vorgesehen, dass für die Pyrolyse mehrere Vorkörperverbunde 52a, 52b, 52c, 52d usw. gestapelt werden, d. h. ein Stapel 54 von Vorkörperverbunden hergestellt wird. Dadurch lässt sich das Eigengewicht der Vorkörperverbunde 52b, 52c, 52d ausnutzen, um für eine gleichmäßige Beschwerung zu sorgen und um eine zusätzliche Beschwerung gering halten zu können. Zwischen benachbarte Vorkörperverbunde können Graphitfolien eingelegt werden.

Es ist auch möglich, die Stegelemente 18 mittels einer Fremdmaterialstruktur zu stabilisieren, um ein Brechen während der Pyrolyse zu verhindern. Beispielsweise kann als Fremdmaterialstruktur ein Gewebe, ein Vlies oder ein Gewirke an einem Stegelement 18 bei der Herstellung des Vorkörperverbunds 10 positioniert werden.

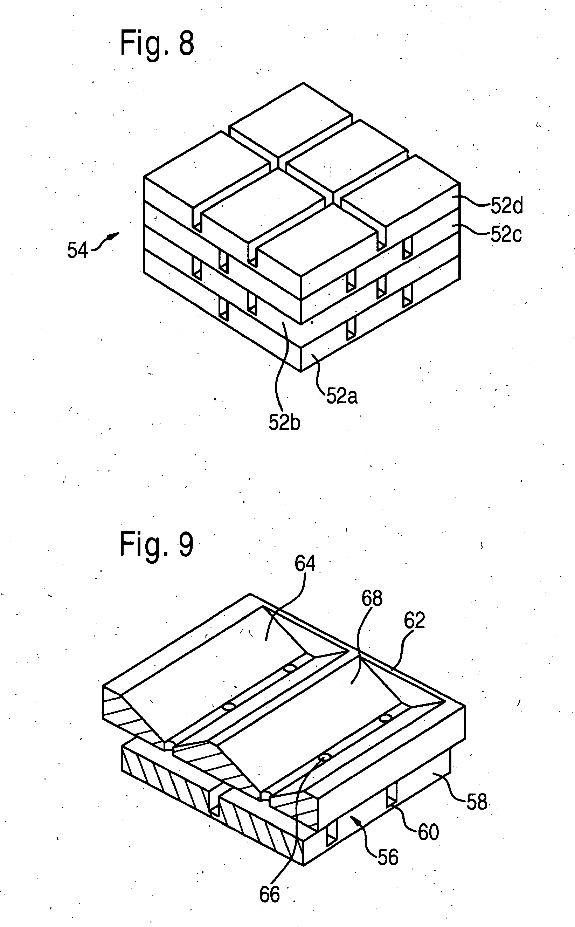

Das Ergebnis der Pyrolyse ist ein offenporöser Kohlenstoffkörperverbund 56 (Figur 9), welcher eine Mehrzahl von Kohlenstoffkörpern 58 umfasst, die aus den Vorkörpern 12 usw. durch Pyrolyse entstanden sind. Die Kohlenstoffkörper 58 des Kohlenstoffkörperverbunds werden durch Kohlenstoffstegelemente 60 zusammengehalten, wobei diese Kohlenstoffstegelemente 60 aus den Stegelementen 18 durch Pyrolyse entstanden sind.

Der Kohlenstoffkörperverbund 56 wird keramisiert. Dazu wird eine Carbidbildnerinfiltration durchgeführt (Figur 9). Beispielsweise wird dazu der Kohlenstoffkörperverbund 56 über eine Oberfläche mit einer Metallschmelze über eine Dosiereinrichtung 62 versorgt. Die Dosiereinrichtung 62 weist Dosierbereiche 64 auf, welche an die einzelnen Kohlenstoffkörper 58 entsprechend den herzustellenden Carbidkeramik-Bauteilen angepasst sind. Beispielsweise weist ein Dosierbereich 64 Öffnungen 66 auf, über die die Metallschmelze auf die entsprechenden Kohlenstoffkörper 58 fließen kann. Die Öffnungen 66 wiederum sind am Grund beispielsweise einer Rinne 68 angeordnet.

Die Carbidbildnerinfiltration erfolgt insbesondere drucklos.

Die Carbidbildnerinfiltration kann auch über stofflich gleichartige Dochte oder durch Direktkontakt von Granulaten mit der Oberfläche des Kohlenstoffkörperverbunds 56 erfolgen. Dochte können auch schon beim Warm pressen des Vorkörperverbunds 10 vorgesehen werden. Sie können miteingepresst werden. Beispielsweise werden Dochte 90 (Figur 7) an Stegelementen 18 und/oder direkt an den Vorkörpern 12 angeordnet.

Nach abgeschlossener Carbidbildnerinfiltration ist ein Carbidkeramik-Bauteilverbund 70 hergestellt (Figur 2), welcher die Carbidkeramik-Bauteile 14 umfasst. Benachbarte Carbidkeramik-Bauteile 14 sind dabei über die Stegelemente 72 verbunden, welche aus einem carbid keramischen Material sind.

Es ist dabei möglich, dass eine Sollbruchstelle an einem Stegelement 72 auch durch Materialwahl hergestellt wird. Insbesondere kann an einem Stegelement 72 eine höhere Sprödigkeit eingestellt werden, wenn der Carbidkeramikanteil im Vergleich zu einem Carbidkeramik-Bauteil 14 erhöht wird. Dies kann durch eine entsprechende Gradierung bei der Herstellung des Vorkörpers 16 erfolgen, wie sie beispielsweise in der EP 1 657 227 A1 beschrieben wird; auf die ausdrücklich Bezug genommen wird. Beispielsweise wird an einem Stegelement 18 eine andere Dichte als an einem Vorkörper 12 eingestellt. Dies kann über eine unterschiedliche Zusammensetzung des Ausgangsmaterials für einen Stegelementbereich und für einen Vorkörperbereich erfolgen. Eine weitere Möglichkeit der Einstellbarkeit liegt in der Beeinflussung des Verdichtungswiderstands, wie in der EP 1 657 227 A1 beschrieben ist.

Nach Herstellung des Carbidkeramik-Bauteilverbunds 70 werden die einzelnen Carbidkeramik-Bauteile 14 aus dem Carbidkeramik-Bauteilverbund 70 gelöst. Dies erfolgt durch entsprechende Bearbeitung und insbesondere mechanische Bearbeitung und/oder Laserbearbeitung.

Bei einer Ausführungsform werden die Stegelemente 72, wenn sie mit einer Sollbruchstelle versehen sind, gebrochen. Wie oben erwähnt, können Sollbruchstellen durch Formgebung der Stegelemente hergestellt werden oder durch entsprechende Materialwahl und insbesondere Einstellung eines höheren Sprödigkeitsgrades im Vergleich zu einem Carbidkeramik-Bauteil 14.

Eventuell noch verbliebene Stegelementansätze können dann wie erwähnt beispielsweise durch mechanische Bearbeitung wie Schleifbearbeitung oder durch Laserbearbeitung wie Laserschneiden entfernt werden, sofern dies überhaupt erforderlich ist.

Die mechanische Bearbeitung bzw. Laserbearbeitung kann dabei integral mit der Endkonturbearbeitung der entsprechenden Carbidkeramik-Bauteile 14 erfolgen.

Als Ergebnis dieses Herstellungsverfahrens erhält man eine Mehrzahl von Carbidkeramik-Bauteilen, wobei diese Carbidkeramik-Bauteile zeitsparend hergestellt worden sind. Über die Herstellung des Vorkörperverbunds 10 lässt sich eine große Anzahl an Carbidkeramik-Bauteilen gleichzeitig herstellen.

Bei einer alternativen Ausführungsform wird der Carbidkeramik-Bauteilverbund 70 an einer Haltevorrichtung 74 positioniert. Die Haltevorrichtung 74 weist Aufnahmeelemente 76 auf, welche in Ausnehmungen 78 zwischen benachbarten Carbidkeramikbauteilen 14 eintauchen können.

Eine Rückseite 80 des Carbidkeramik-Bauteilverbunds 70 lässt sich bearbeiten. Insbesondere erfolgt eine Schleifbearbeitung über eine Flächenschleifmaschine 82. Dadurch lassen sich die (Carbidkeramik-)Stegelemente 72 abschleifen und damit gleichzeitig die Carbidkeramik-Bauteile 14 an der Rückseite 80 bearbeiten. Beispielsweise lassen sich so Reibflächen an den Carbidkeramik-Bauteilen 14 herstellen.

Der Carbidkeramik-Bauteilverbund 70 ist als Ganzes handhabbar und kann so an der Haltevorrichtung 74 positioniert werden.

Durch das erfindungsgemäße Verfahren lassen sich Carbidkeramik-Bauteile in großer Stückzahl mit relativ geringem Zeitaufwand und Kostenaufwand herstellen. Insbesondere lassen sich baugleiche Carbidkeramik-Bauteile in großer Stückzahl herstellen. Es ist dabei keine individuelle Entformung aus einem Presswerkzeug notwendig, da der ganze Vorkörperverbund 10 entformt werden kann. Ferner ist keine einzelne Pyrolyse notwendig, da der Vorkörperverbund 10 als Ganzes pyrolysiert werden kann. Weiterhin ist keine einzelne Carbidbildnerinfiltration notwendig, da der Kohlenstoffkörperverbund 56 einer Carbidbildnerinfiltration unterzogen werden kann. Ferner lassen sich die hergestellten Carbidkeramik-Bauteile 14 auf einfache Weise in ihre Endkontur bringen, da der Carbidkeramik-Bauteilverbund 70 als Ganzes bearbeitet werden kann.

Durch das erfindungsgemäße Verfahren lassen sich Carbidkeramik-Bauteile herstellen, welche beispielsweise als Kohlebürsten, Schleifstücke, Reibbeläge für Aufzugbremsen oder Wärmesenken für Bauelemente in der Elektronikindustrie einsetzbar sind. Insbesondere lassen sich Carbidkeramik-Bauteile aus biomorphem SiC-Verbundkeramiken herstellen, wenn Silicium als Carbidbildner eingesetzt wird.

Bei einer konkreten Ausführungsform werden Reibbeläge aus SiC-Verbundkeramiken insbesondere für Sicherheitsbremsen in Aufzügen hergestellt. Typische Abmessungen eines solchen Reibbelags sind 60 mm bis 150 mm für die Länge, für die Breite 20 mm bis 50 mm und für die Dicke ca. 6 mm bis 8 mm. Solche Reibbeläge sind üblicherweise mit mindestens zwei durchgängigen Aufnahmebohrungen versehen. Es können auch Quernuten vorgesehen sein, um den Schmutz von einer Reibfläche aufzunehmen und abzuführen. Entsprechende Reibbeläge sind in der DE 100 45 881 beschrieben, auf die ausdrücklich Bezug genommen wird.

Beispielsweise werden 50 Reibbeläge hergestellt. Dazu wird ein Pressgesenk mit äußeren Abmessungen 400 mm x 350 mm verwendet. Es werden Stegelemente 18 mit Stegbreiten von 5 mm hergestellt. Das Pressgesenk weist entsprechend den 50 herzustellenden Reibbelägen 50 Kavitäten auf. Diese werden mit dem Ausgangsmaterial gefüllt. Beispielsweise kommt eine Holzpulvermischung aus Pulverharz, Holzmehl und Pechfasern zum Einsatz. Bei entsprechender Ausgestaltung des Pressgesenks (Vielfachgesenks) können die erwähnten Aufnahmebohrungen und Quernuten integral hergestellt werden.

Es ist dabei vorgesehen, dass alle 50 Reibbelag-Vorkörper gleichzeitig nach dem Warmpressen mittels eines oder mehreren Ausdruckstempeln entformt werden können.

Für die Wirkung als Reibbelag muss das entsprechende Carbidkeramik-Bauteil eine Oberfläche mit einem hohen Keramikteil aufweisen. Dadurch erhält man einen hohen Reibwert bei geringem Verschleiß. Die Oberflächen des herzustellenden Vorkörperverbunds sollten deshalb beim Warmpressen höher verdichtet werden, um bei der späteren Keramisierung einen höheren Keramikanteil an der Oberfläche zu erreichen (wie es in der EP 1 657 227 A1 beschrieben ist). Dadurch erhält man eine gradierte Keramik, welche beispielsweise ein symmetrisches Dichteprofil aufweist.

Während der Pyrolyse wird der so hergestellte Vorkörperverbund 10 mit einer Graphitplatte beschwert, um einen Verzug zu vermeiden.

Anschließend wird der so hergestellte Kohlenstoffkörperverbund mit einer Cu-Si-Legierung infiltriert. Der Kupferanteil in der Legierung beträgt beispielsweise 50 Massenprozent. Man erhält dann einen Metall-Keramik-Verbundwerkstoff mit einer duktilen Kupfermatrix.

Dazu wird beispielsweise eine Mischung aus Kupfergranulat in einer Korngröße von 1 mm bis 10 mm und Siliciumgranulat in einer Korngröße von ca. 1 mm für jedes herzustellende Carbidkeramik-Bauteil eingewogen und in die Rinnen 68 der Dosiereinrichtung 62 eingewogen.

An dem hergestellten Carbidkeramik-Bauteilverbund werden Schleifarbeiten durchgeführt. Insbesondere erfolgt ein beidseitiges planparalleles Abschleifen mit vollständiger Entfernung der Stegelemente 72.

Die so hergestellten Reibbeläge weisen die Zusammensetzung Kupfer, SiC und Restsilicium sowie Pechfasern auf. Von der Oberfläche zur Belagmitte hin nimmt der SiC-Keramikanteil ab und der Anteil der duktilen Kupferphase nimmt zu. Die Werkstoffdichte beträgt ca. 3,05 g/cm³.

## Patentansprüche

1. Verfahren zur Herstellung von Carbidkeramik-Bauteilen, bei dem ein Vorkörperverbund hergestellt wird, welcher eine Mehrzahl von Vorkörpern für die jeweiligen Bauteile umfasst, wobei jeder Vorkörper an mindestens einem benachbarten Vorkörper durch mindestens ein Stegelement gehalten wird, und der Vorkörperverbund pyrolysiert und/oder graphitiert wird.

2. Verfahren nach Anspruch 1, **dadurch gekennzeichnet, dass** an dem pyrolysierten Vorkörperverbund eine Carbidbildnerinfiltration durchgeführt wird.

3. Verfahren nach Anspruch 2, **dadurch gekennzeichnet, dass** die Carbidbildnerinfiltration drucklos durchgeführt wird.

4. Verfahren nach Anspruch 2 oder 3, **dadurch gekennzeichnet, dass** die Carbidbildnerinfiltration mittels einer Metallschmelze durchgeführt wird.

5. Verfahren nach einem der Ansprüche 2 bis 4, **dadurch gekennzeichnet, dass** ein Carbidkeramik-Bauteilverbund hergestellt wird.

6. Verfahren nach einem der vorangehenden Ansprüche, **dadurch gekennzeichnet, dass** ein Stegelement eine Höhe aufweist, welche kleiner ist als eine Höhe eines Vorkörpers, an dem das Stegelement gehalten ist.

7. Verfahren nach einem der vorangehenden Ansprüche, **dadurch gekennzeichnet, dass** ein Stegelement eine Höhe zwischen 0,5 mm und 10 mm aufweist.

8. Verfahren nach einem der vorangehenden Ansprüche, **dadurch gekennzeichnet, dass** ein Stegelement eine Breite zwischen 0,5 mm und 10 mm aufweist.

9. Verfahren nach einem der vorangehenden Ansprüche, **dadurch gekennzeichnet, dass** der Vorkörperverbund über Pressen oder Spritzgießen hergestellt wird.

10. Verfahren nach Anspruch 9, **dadurch gekennzeichnet, dass** eine Form verwendet wird, welche mit einer Stegetement-Gegenstruktur versehen ist.

11. Verfahren nach Anspruch 10, **dadurch gekennzeichnet, dass** die Stegelement-Gegenstruktur an einem Unterstempel angeordnet wird oder in ein Pressgesenk eingelegt wird.

12. Verfahren nach Anspruch 11, **dadurch gekennzeichnet, dass** nachfolgend der Positionierung der Stegelement-Gegenstruktur Ausgangsmaterial für den Vorkörperverbund eingefüllt wird.

13. Verfahren nach Anspruch 11 oder 12, **dadurch gekennzeichnet, dass** ein Oberstempel angepasst an die Stegelement-Gegenstruktur segmentiert ist.

14. Verfahren nach einem der Ansprüche 10 bis 13, **dadurch gekennzeichnet, dass** die Stegelement-Gegenstruktur eine oder mehrere Ausnehmungen aufweist.

15. Verfahren nach einem der Ansprüche 10 bis 14, **dadurch gekennzeichnet, dass** nach einem Pressvorgahg die Stegelement-Gegenstruktur vor Entfernung des Vorkörperverbunds aus einem Gesenk entfernt wird.

16. Verfahren nach einem der vorangehenden Ansprüche, **dadurch gekennZeichnet, dass** der Vorkörperverbund porös ist.

17. Verfahren nach einem der vorangehenden Ansprüche, **dadurch gekennzeichnet, dass** ein Ausgangsmaterial für den Vorkörperverbund ein kohlenstoffhaltiges Material und ein aushärtbares Bindemittel umfasst.

18. Verfahren nach Anspruch 17, **dadurch gekennzeichnet, dass** das Ausgangsmaterial Fasern umfasst.

19. Verfahren nach einem der vorangehenden Ansprüche, **dadurch gekennzeichnet dass** der Vorkörperverbund aus einem biogenen Material hergestellt wird.

20. Verfahren nach Anspruch 19, **dadurch gekennzeichnet, dass** der Vorkörperverbund aus einem Ausgangsrriaterial hergestellt wird, welches cellulosehaltiges Pulver umfasst.

21. Verfahren nach einem der vorangehenden Ansprüche, **dadurch gekennzeichnet, dass** die Stegelemente mit einer Fremdmaterialstruktur zur Stabilisierung versehen werden.

22. Verfahren nach Anspruch 21, **dadurch gekennzeichnet, dass** die Fremdmaterialstruktur ein Gewebe, Gewirk oder Vlies ist.

23. Verfahren nach einem der vorangehenden Ansprüche, **dadurch gekennzeichnet, dass** an einem Stegelement eine oder mehrere Sollbruchstellen hergestellt werden.

24. Verfahren nach Anspruch 23, **dadurch gekennzeichnet, dass** eine Sollbruchstelle über Formgebung des Stegelements hergestellt wird.

25. Verfahren nach Anspruch 23 oder 24, **dadurch gekennzeichnet, dass** eine Sollbruchstelle über Materialwahl hergestellt wird.

26. Verfahren nach Anspruch 25, **dadurch gekennzeichnet, dass** ein Stegelement so hergestellt wird, dass es spröder als ein Carbidkeramik-Bauteil ist, an dem es angeordnet ist.

27. Verfahren nach Anspruch 26, **dadurch gekennzeichnet, dass** ein Stegelement mit höherem Carbidkeramik-Anteil als ein CarbidkeramikBauteil, an dem es angeordnet ist, hergestellt wird.

28. Verfahren nach einem der vorangehenden Ansprüche, **dadurch gekennzeichnet, dass** der Vorkörperverbund so hergestellt und/oder so pyrolysiert wird, dass Schrumpfspannungen während der Pyrolyse kein Brechen der Stegelemente verursachen.

29. Verfahren nach einem der vorangehenden Ansprüche, **dadurch gekennzeichnet, dass** der Vorkörperverbund bei der Pyrolyse gleichmäßig beschwert wird.

30. Verfahren nach einem der vorangehenden Ansprüche, **dadurch gekennzeichnet, dass** Vorkörperverbunde für die Pyrolyse gestapelt werden.

31. Verfahren nach einem der vorangehenden Ansprüche, **dadurch gekennzeichnet, das** Stegelemente an Seiten und/oder Ecken von Vorkörpern hergestellt werden.

32. Verfahren nach einem der vorangehenden Ansprüche, **dadurch gekennzeichnet, dass** Stegelemente an oder in der Nähe einer Oberseite oder Unterseite des Vorkörpers hergestellt werden.

33. Verfahren nach einem der vorangehenden Ansprüche, **dadurch gekennzeichnet, dass** an den Carbidkeramik-Bauteilen die Stegelemente oder Stegelementansätze entfernt werden.

34. Verfahren nach Anspruch 33, **dadurch gekennzeichnet, dass** zur Entfernung der Stegelemente oder Stegelementansätze ein Carbidkeramik-Bauteilverbund an einer Haltevorrichtung gehalten wird.

35. Verfahren nach Anspruch 33 oder 34, **dadurch gekennzeichnet, dass** die Entfernung über mechanische Bearbeitung und/oder Laserbearbeitung erfolgt.

36. Verfahren nach einem der Ansprüche 32 bis 35, **dadurch gekennzeichnet, dass** eine Schleifbearbeitung erfolgt.

37. Verfahren nach einem der vorangehenden Ansprüche, **dadurch gekennzeichnet, dass** Carbidbildner-Dochte bei der Herstellung des Vorkörperverbunds an Stegelementen und/oder zwischen Vorkörpern angeordnet werden.

## Claims

1. Method for producing carbide ceramic components in which a preform composite is produced which comprises a plurality of preforms for the respective components, wherein each preform is held on at least one adjacent preform by at least one web element, and the preform composite is pyrolysed and/or graphitised.

2. Method according to Claim 1, **characterised in that** carbide former infiltration is carried out on the pyrolysed preform composite.

3. Method according to Claim 2, **characterised in that** the carbide former infiltration is carried out without the use of pressure.

4. Method according to Claim 2 or 3, **characterised in that** the carbide former infiltration is carried out by means of a metal melt.

5. Method according to any one of Claims 2 to 4, **characterised in that** a carbide ceramic component composite is produced.

6. Method according to any one of the preceding Claims, **characterised in that** a web element is of a height which is smaller than a height of a preform on which the web element is held.

7. Method according to any one of the preceding Claims, **characterised in that** a web element is of a height of between 0.5 mm and 10 mm.

8. Method according to any one of the preceding Claims, **characterised in that** a web element is of a width of between 0.5 mm and 10 mm.

9. Method according to any one of the preceding Claims, **characterised in that** the preform composite is produced by means of pressing or injection moulding.

10. Method according to Claim 9, **characterised in that** a mould is used which is provided with a web element mating structure.

11. Method according to Claim 10, **characterised in that** the web element mating structure is disposed on a lower punch or placed in a press die.

12. Method according to Claim 11, **characterised in that** starting material for the preform composite is fed in after the web element mating structure has been positioned.

13. Method according to Claim 11 or 12, **characterised in that** an upper punch is segmented so as to match the web element mating structure.

14. Method according to any one of Claims 10 to 13, **characterised in that** the web element mating structure has one or more recesses.

15. Method according to any one of Claims 10 to 14, **characterised in that**, following a pressing process, the web element mating structure is removed from a die before removing the preform composite.

16. Method according to any one of the preceding Claims, **characterised in that** the preform composite is porous.

17. Method according to any one of the preceding Claims, **characterised in that** a starting material for the preform composite comprises a carbonaceous material and a curable binding agent.

18. Method according to Claim 17, **characterised in that** the starting material comprises fibres.

19. Method according to any one of the preceding Claims, **characterised in that** the preform composite is made from a biogenic material.

20. Method according to Claim 19, **characterised in that** the preform composite is made from a starting material which comprises cellulosic powder.

21. Method according to any one of the preceding Claims, **characterised in that** the web elements are provided with a different material structure for stabilisation.

22. Method according to Claim 21, **characterised in that** the different material structure is a woven fabric, knitted fabric or non-woven fabric.

23. Method according to any one of the preceding Claims, **characterised in that** one or more predetermined breaking points are produced on a web element.

24. Method according to Claim 23, **characterised in that** a predetermined breaking point is produced by shaping the web element.

25. Method according to Claim 23 or 24, **characterised in that** a predetermined breaking point is produced by means of material selection.

26. Method according to Claim 25, **characterised in that** a web element is produced so that it is more brittle than a carbide ceramic component on which it is disposed.

27. Method according to Claim 26, **characterised in that** a web element is produced with a higher proportion of carbide ceramic than a carbide ceramic component on which it is disposed.

28. Method according to any one of the preceding Claims, **characterised in that** the preform composite is produced and/or pyrolysed so that shrinkage stresses do not cause the web elements to break during pyrolysis.

29. Method according to any one of the preceding Claims, **characterised in that** the preform composite is uniformly loaded during pyrolysis.

30. Method according to any one of the preceding Claims, **characterised in that** the preform composites are stacked for pyrolysis.

31. Method according to any one of the preceding Claims, **characterised in that** the web elements are produced on sides and/or corners of preforms.

32. Method according to any one of the preceding Claims, **characterised in that** web elements are produced on or in the vicinity of a top side or an underside of the preform.

33. Method according to any one of the preceding Claims, **characterised in that** the web elements or web element projections are removed from the carbide ceramic components.

34. Method according to Claim 33, **characterised in that** a carbide ceramic component composite is held on a holding device in order to remove the web elements or web element projections.

35. Method according to Claim 33 or 34, **characterised in that** the removal takes place by means of mechanical machining and/or laser machining.

36. Method according to any one of Claims 32 to 35, **characterised in that** a grinding treatment takes place.

37. Method according to any one of the preceding Claims, **characterised in that** carbide former wicks are disposed on web elements and/or between preforms when the preform composite is produced.

## Revendications

1. Procédé de fabrication de composants en céramique de carbure, dans lequel un assemblage de pré-formes est fabriqué, lequel comprend une pluralité de pré-formes pour les composants correspondants, chaque pré-forme étant maintenue par au moins un élément en barrette à au moins une pré-forme adjacente, et l'assemblage de pré-formes étant pyrolysé et/où graphité.

2. Procédé selon la revendication 1, **caractérisé en ce qu'**une infiltration de formateur de carbure est effectuée sur l'assemblage de pré-formes pyrolysé.

3. Procédé selon la revendication 2, **caractérisé en ce que** l'infiltration de formateur de carbure est effectuée sans pression.

4. Procédé selon la revendication 2 ou la revendication 3, **caractérisé en ce que** l'infiltration de formateur de carbure est effectuée au moyen d'une fonte métallique.

5. Procédé selon l'une des revendications 2 à 4, **caractérisé en ce qu'**un assemblage de composants en céramique de carbure est fabriqué.

6. Procédé selon l'une des revendications précédentes, **caractérisé en ce qu'**un élément en barrette présente une hauteur inférieure à une hauteur d'une pré-forme à laquelle l'élément en barrette est maintenu.

7. Procédé selon l'une des revendications précédentes, **caractérisé en ce qu'**un élément en barrette présente une hauteur comprise entre 0 , 5 mm et 10 mm.

8. Procédé selon l'une des revendications précédentes, **caractérisé en ce qu'**un élément en barrette présente une largeur comprise entre 0 , 5 mm et 10 mm.

9. Procédé selon l'une des revendications précédentes, **caractérisé en ce que** l'assemblage de pré-formes est fabriqué par pressage ou par moulage par injection.

10. Procédé selon la revendication 9, **caractérisé en ce qu'**un moule est utilisé, lequel est pourvu d'une contre-structure d'élément en barrette.

11. Procédé selon la revendication 10, **caractérisé en ce que** la contre-structure d'élément en barrette est disposée au niveau d'un piston inférieur ou dans une matrice de presse.

12. Procédé selon la revendication 11, **caractérisé en ce que** un matériau de sortie pour l'assemblage de pré-formes est versé après positionnement de la contre-structure d'élément en barrette.

13. Procédé selon la revendication 11 ou la revendication 12, **caractérisé en ce qu'**un piston supérieur ajusté à la contre-structure d'élément en barrette est segmenté.

14. Procédé selon l'une des revendications 10 à 13, **caractérisé en ce que** la contre-structure d'élément en barrette comporte un ou plusieurs évidements.

15. Procédé selon l'une des revendications 10 à 14, **caractérisé en ce qu'**après une phase de pressage, la contre-structure d'élément en barrette est retirée d'une matrice avant de retirer l'assemblage de pré-formes.

16. Procédé selon l'une des revendications précédentes, **caractérisé en ce que** l'assemblage de pré-formes est poreux.

17. Procédé selon l'une des revendications précédentes, **caractérisé en ce qu'**un matériau de sortie pour l'assemblage de pré-formes comprend un matériau à teneur en carbone et un liant durcissant.

18. Procédé selon la revendication 17, **caractérisé en ce que** le matériau de sortie comprend des fibres.

19. Procédé selon l'une des revendications précédentes, **caractérisé en ce que** l'assemblage de pré-formes est fabriqué dans un matériau biogène.

20. Procédé selon la revendication 19, **caractérisé en ce que** l'assemblage de pré-formes est fabriqué dans un matériau de sortie comprenant de la poudre contenant de la cellulose.

21. Procédé selon l'une des revendications précédentes, **caractérisé en ce que** les éléments en barrette sont pourvus d'une structure en matériau extérieur pour la stabilisation.

22. Procédé selon la revendication 21, **caractérisé en ce que** la structure en matériau extérieur est un tissu, une étoffe à mailles ou un non-tissé.

23. Procédé selon l'une des revendications précédentes, **caractérisé en ce qu'**un ou plusieurs points de cassure prédéfinis sont réalisés sur un élément en barrette.

24. Procédé selon la revendication 23, **caractérisé en ce qu'**un point de cassure prédéfinis est réalisé par formage de l'élément en barrette.

25. Procédé selon la revendication 23 ou la revendication 24, **caractérisé en ce qu'**un point de cassure obligée est réalisé par sélection du matériau.

26. Procédé selon la revendication 25, **caractérisé en ce qu'**un élément en barrette est fabriqué de manière à être plus cassant qu'un composant en céramique de carbure au niveau duquel il est disposé.

27. Procédé selon la revendication 26, **caractérisé en ce qu'**un élément en barrette est fabriqué avec une proportion de céramique de carbure supérieure à celle d'un composant en céramique de carbure au niveau duquel il est disposé.

28. Procédé selon l'une des revendications précédentes, **caractérisé en ce que** l'assemblage de pré-formes est fabriqué et/ou pyrolysé de telle manière que des contraintes de retrait ne provoquent aucune cassure des éléments en barrette pendant la pyrolyse.

29. Procédé selon l'une des revendications précédentes, **caractérisé en ce que** l'assemblage de pré-formes est chargé de manière homogène lors de la pyrolyse.

30. Procédé selon l'une des revendications précédentes, **caractérisé en ce que** des assemblages de pré-formes sont empilés pour la pyrolyse.

31. Procédé selon l'une des revendications précédentes, **caractérisé en ce que** des éléments en barrette sont fabriqués sur des côtés et/ou des coins de pré-formes.

32. Procédé selon l'une des revendications précédentes, **caractérisé en ce que** des éléments en barrette sont fabriqués sur une face supérieure ou une face inférieure de la pré-forme, ou à proximité de celles-ci.

33. Procédé selon l'une des revendications précédentes, **caractérisé en ce que** les éléments en barrette ou les embases d'éléments en barrette sont retirés sur les composants en céramique carbure.

34. Procédé selon la revendication 33, **caractérisé en ce qu'**un assemblage de composants en céramique carbure est maintenu contre un dispositif de maintien pour le retrait des éléments en barrette ou des embases d'éléments en barrette.

35. Procédé selon la revendication 33 ou la revendication 34, **caractérisé en ce que** le retrait est effectué par usinage mécanique et/ou par usinage laser.

36. Procédé selon l'une des revendications 32 à 35, **caractérisé en ce qu'**il est procédé à un usinage par rectification.

37. Procédé selon l'une des revendications précédentes, **caractérisé en ce que** des mèches pour formateur de carbure sont disposées contre les éléments en barre et/ou entre des pré-formes lors de la fabrication de l'assemblage de pré-formes.
